# EUROPEAN PATENT SPECIFICATION

(11) **EP 2 075 188 B1**
(45) Date of publication and mention of the grant of the patent: **11.04.2018**
(21) Application number: 08254121.0
(22) Date of filing: 23.12.2008
(51) Int. Cl.: B62M 25/06, B62K 23/08, B62K 11/00, B62J 17/00, B62J 23/00, B62J 25/00

(54) **Straddle-type vehicle**
Im Grätschsitz zu benutzendes Fahrzeug
Véhicule de type monté à califourchon

(30) Priority: 28.12.2007 JP 2007338783
(43) Date of publication of application: 01.07.2009
(73) Proprietor: Yamaha Hatsudoki Kabushiki Kaisha, Shizuoka-ken 438-8501 (JP)
(72) Inventor: Miyazaki, Takaaki, Iwata-shi, Shizuoka-ken 438-8501 (JP)
(74) Representative: Moreland, David

(56) References cited:
- GB-A- 138 714
- JP-A- 3 065 483
- Anonymous: "Die etwas andere Seite von Bikern - Verschiedene Motorräder" Maier4all 14 November 2007 (2007-11-14), XP002581863 Retrieved from the Internet: URL:http://web.archive.org/web/20071114073 039/http://www.maier4all.de/index7.htm> [retrieved on 2007-11-14]
- "Motorrad Katalog 2003" 1 January 2003 (2003-01-01), MO Medien Verlag GmbH , Stuttgart , XP002581864 * figure of Hyosung XRX 125 on page 95; page 95 * * page 242 *
- Anonymous: "image of Hyosung XRX 125 2005" Bikez 19 April 2006 (2006-04-19), XP002581865 Retrieved from the Internet: URL:http://web.archive.org/web/20060419011 707/http://www.bikez.com/pictures/large.ph p?image=../pictures/hyosung/2005/21685_0_1 _4_xrx+125_Image+credits+-+Hyosung.jpg> [retrieved on 2006-04-19]
- Anonymous: "Big Beta alp 125 motorcycle picture" Bikez 3 November 2007 (2007-11-03), XP002581891 Retrieved from the Internet: URL:http://web.archive.org/web/20071103233 747/http://www.bikez.com/pictures/large.ph p?image=../pictures/beta/2006/23327_0_1_4_ alp+125_Image+credits+-+Beta.jpg> [retrieved on 2007-11-03]

## Description

### FIELD OF THE INVENTION

The present invention relates to a saddle-type vehicle and particularly relates to structures of an under cowl and an operation pedal of a straddle-type vehicle.

### BACKGROUND TO THE INVENTION

Straddle-type vehicles are known which include a cowl for reduction of air resistance and windshield during running. Examples of such a cowl include a cowl called a bikini cowl that is attached to a handle portion and covers a headlamp. Straddle-type vehicles are also known which include the bikini cowl and also an under cowl which covers the region of a cylinder block and a cylinder head of the engine (see, for example, Japanese Examined Patent Publication No. 3-62590). In such a vehicle, the under cowl is provided to cover up both left and right sides of the engine on which a lower connection fin passing transversely across front sides of lower portions of a crankcase and an exhaust pipe is built. The under cowl of this type can advantageously introduce cooling air into the engine during running. Furthermore, the straddle-type vehicle disclosed in the Japanese Examined Patent Publication No. 3-62590 is intended to permit good maintainability of the engine and to prevent an interior of the under cowl from retaining heat from the engine, although regions of the engine are covered by the under cowl.

An operation for performing a transmission operation is often provided on a side portion of an engine.

During manipulation of the operation pedal, a rider's foot may strike or come into contact with the engine, which is problematic. In an attempt to address this problem, it is considered to provide a cover in a region on which a rider's foot tends to strike during manipulation of the operation pedal. This, however, disadvantageously increases the number of components, resulting in cost increases, assembly complexities and the like.

GB138,714 describes a motorcycle having footboards on either side, the footboards being connected and continue under the frame and engine to form an under shield. To the forward end of the footboards, a large, wide mud guard is fixed to the motorcycle frame. The sides of the motorcycle are completely enclosed by large side shields which extend from the footboards to the fuel tank or upper part of the motor cycle and from the rear mudguard to the front mudguard. A brake lever extends to the side of the left side panel. Gear and clutch levers are provided at a right side of the motorcycle and project at an edge of the side shields against the side of the fuel tank so as to not pierce the side shields or impair the detachability of the sides.

The Honda XRV750 Africa Trim released between 1987 and 2002 is a straddle-type vehicle in the form of a motorcycle, comprising a body frame, an engine, an operation pedal extending to a side portion of the engine and comprising a pedal portion and a bash plate or shield. The bash plate or shield covers at least a part of the side portion of the engine and extends between the operation pedal and a side portion of the engine. The engine comprises a crankcase that in use may receive and contain oil and wherein the bash plate or shield extends between at least part of the operation pedal and the crank case.

### SUMMARY OF THE INVENTION

Various aspects of the present invention are defined in the independent claim. Some preferred features are defined in the dependent claim.

Described herein is a straddle-type vehicle comprising:
a body frame;
an engine;
an operation pedal pivotally extending to a side portion of the engine and comprising a pedal portion; and
an under cowl covering a side portion of the engine, wherein the under cowl extends between the side portion of the engine and the pedal portion.

The operation pedal may further comprise an arm portion facing towards the side portion of the engine. The arm portion may extend from a shaft attached to the engine. The pedal portion may be provided at a tip end of the arm portion.

The body frame includes a footrest bracket to which a footrest is attached. A region of the under cowl extending between the side portion of the engine and the pedal portion is fixed to the footrest bracket.

A region of the under cowl extending between the side portion of the engine and the pedal portion faces a side portion of an oil reservoir of an engine.

The straddle-type vehicle may further comprise a transmission. The operation pedal may be configured to perform a transmission operation on the transmission.

According to such a straddle-type vehicle, the under cowl extends between the side portion of the engine and the pedal portion and can, therefore, prevent a foot from striking on the engine during manipulation of the operation pedal. In this case, the foot can be prevented from striking on the engine by changing a shape of the under cowl, thereby making it possible to suppress the cost.

### BRIEF DESCRIPTION OF THE DRAWINGS

These and other aspects of the present invention will now be described, by way of example only, with reference to
the accompanying drawings, in which:
Fig. 1 is a left side view of a straddle-type vehicle according to one embodiment of the present invention;
Fig. 2 is a left side view showing a state in which an under cowl is detached from the straddle-type vehicle according to one embodiment of the present invention;
Fig. 3 is a schematic plan view showing the positional relation among an engine, an operation pedal, and the under cowl of the straddle-type vehicle according to one embodiment of the present invention;
Fig. 4 is a front view showing a state in which the under cowl of the straddle-type vehicle according to one embodiment of the present invention is attached to a body frame; and
Fig. 5 is a left side view showing a region to which the under cowl of the straddle-type vehicle according to one embodiment of the present invention is attached.

### DETAILED DESCRIPTION OF THE DRAWINGS

A straddle-type vehicle according to one embodiment of the present invention will be described hereinafter with reference to the drawings. In the drawings, members or regions exhibiting the same functions are denoted by the same reference symbols, respectively. Further, the present invention is not limited to the following embodiment. Moreover, if expressions such as "front", "rear", "left", "right", "upper", and "lower" are used when referring to the straddle-type vehicle, they are according to directions as seen from a rider in a state in which the rider rides on the straddle-type vehicle in an ordinary riding posture, respectively. Furthermore, a front side of the vehicle is denoted by "Fr", a rear side thereof is denoted by "Rr", a left side thereof is denoted by "L", and a right side thereof is denoted by "R" as necessary. Each drawing is shown on premise that the drawing is seen in a direction of reference symbols.

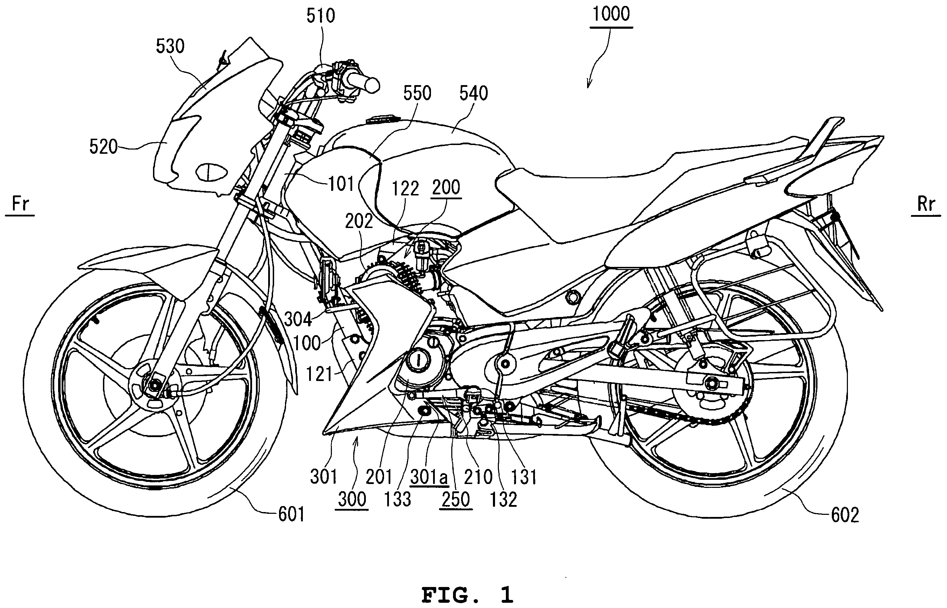

As shown in Fig. 1, a straddle-type vehicle 1000 according to one embodiment of the present invention includes an under cowl 300 covering the side portion of an engine 200 attached to a body frame 100. More specifically, in this embodiment, as shown in Fig. 1, the straddle-type vehicle 1000 includes a small-sized cowl 530 covering a headlamp 520 attached to a handle 510. A fuel tank 540 is arranged on a rear side of a head pipe 101 of the body frame 100 to which the handle 510 is attached. Small-sized side cowls 550 are attached to front side portions of the fuel tank 540.

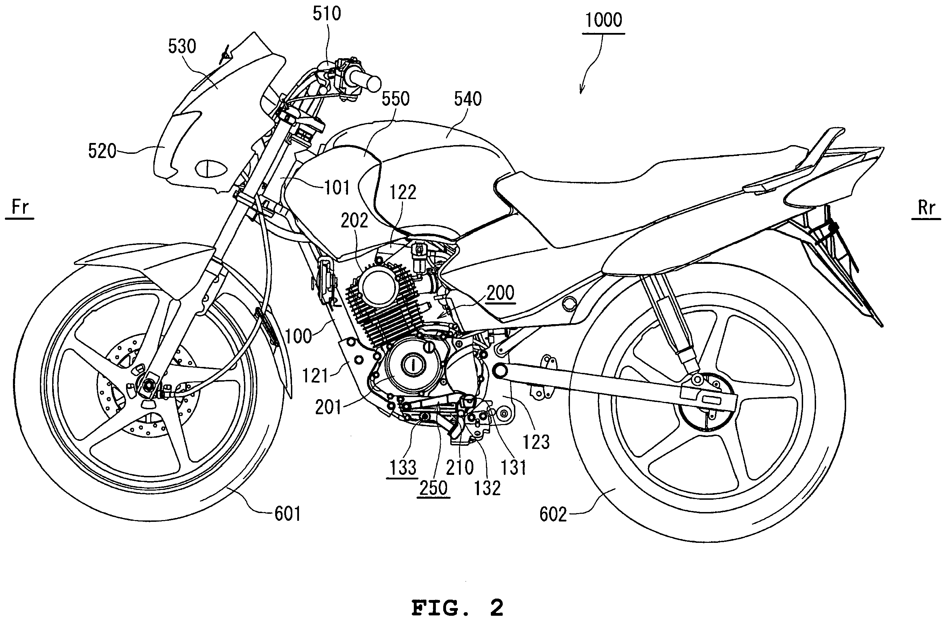

Fig. 2 shows the vehicle 100 with the under cowl 300 removed. As shown in Fig. 2, the engine 200 is arranged below the fuel tank 540. In this embodiment, the engine 200 is attached to the body frame 100 in a space between a front wheel 601 and a rear wheel 602 of the straddle-type vehicle 1000 and below the fuel tank 540. The engine 200 is arranged so that a crankcase 201 is located at a lower position and a cylinder 202 is located at an upper position. An oil reservoir 210, in which oil circulating in the engine 200 is accumulated, is provided below the engine 200. A crankshaft is arranged in the crankcase 201 to be oriented in a vehicle width direction. The engine 200 is attached to the body frame 100 via a plurality of brackets 121, 122, and 123. In this embodiment, a lower portion of the engine 200 is attached to the brackets 121 and 123 and an upper portion of the cylinder 202 of the engine 200 is attached to the bracket 122. Although not shown, a pair of left and right brackets 122 is provided to attach the upper portion of the cylinder 202 to the body frame 100, respectively. In this engine 200, a plurality of fins are provided outside of the cylinder 202. Brackets (footrest brackets 132) to which each footrest 131 is attached are attached to a lower portion of the body frame 100. Further, attachment portions 133 to which the under cowl 300 is attached are provided in the left and right footrest brackets 132, respectively. Moreover, as shown in Fig. 1, an operation pedal 250 for performing transmission operations is provided forward of the footrest 131 shown in Fig. 2.

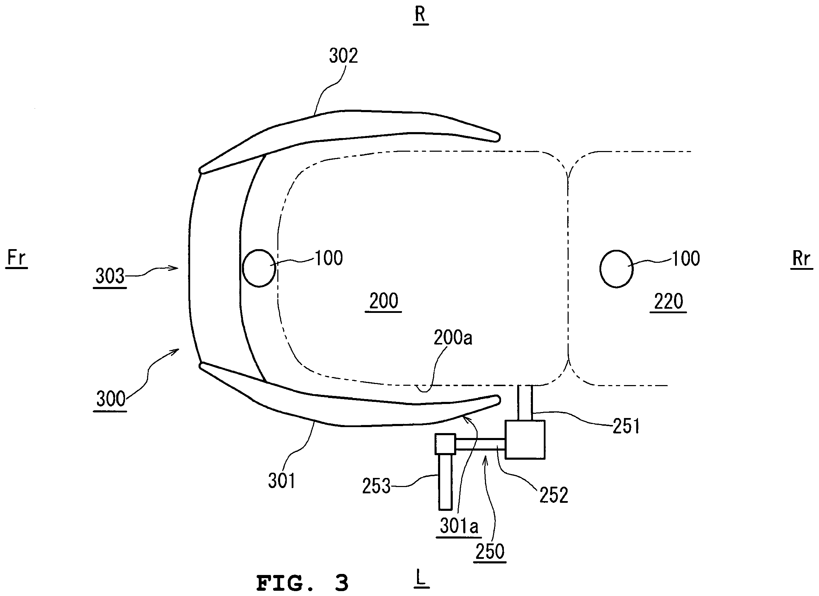

The operation pedal 250 is arranged to perform a transmission operation on a transmission 220 (see Fig. 3) is provided in rear of the engine 200. Fig. 3 is a schematic plan view showing the positional relationship among the engine 200, the operation pedal 250, and the under cowl 300. The operation pedal 250 extends pivotally to a side portion 200a of the engine 200. As shown in Fig. 3, the operation pedal 250 includes a swinging or rotating shaft 251, an arm portion 252, and a pedal portion 253. The swinging shaft 251 is attached to a lower portion of the engine 200 and the arm portion 252 extends from the swinging shaft 251 so as to face the side portion 200a of the engine 200. The pedal portion 253 is provided at a tip end of the arm portion 252.

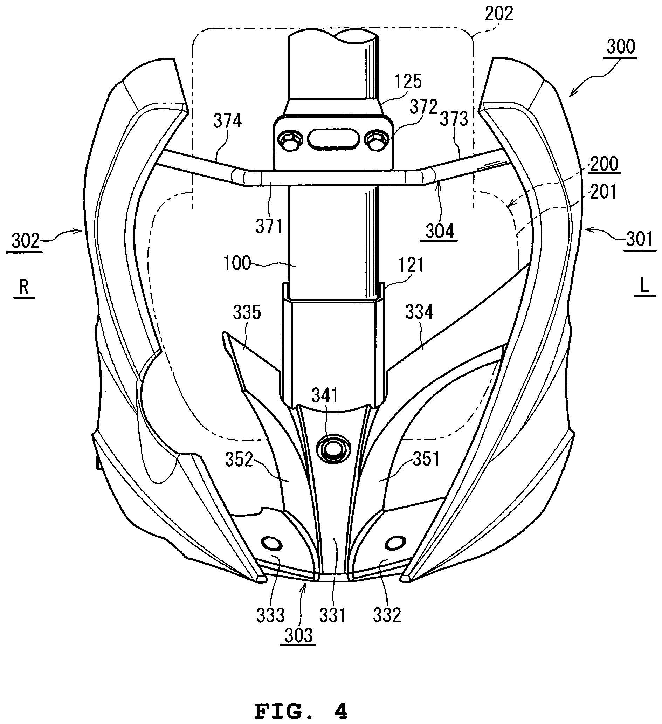

The under cowl 300 extends between the side portion 200a of the engine 200 and the pedal portion 253. In this embodiment, the under cowl 300 includes a left side member 301, a right side member 302, a front side member 303, and a stay 304 as shown in Fig. 4.

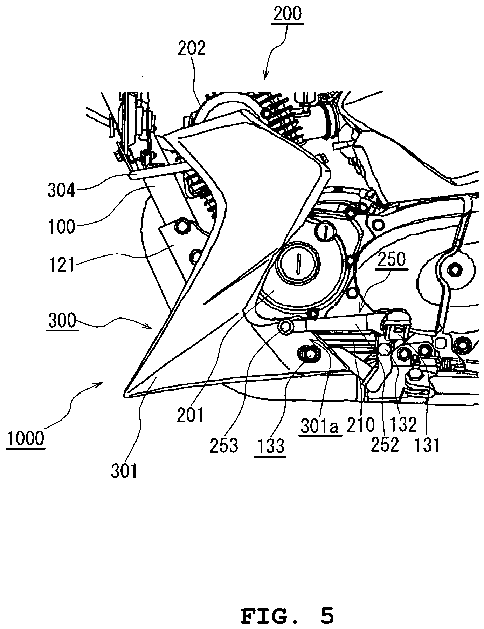

As shown in Fig. 1, the left side member 301 covers at least a part of a left side of the engine 200. More specifically, in this embodiment, the left side member 301 partially covers a left side of a cylinder portion of the engine 200 and a front side portion of a left side of the crankcase 201. The region is formed into a gently curved shape slightly projecting outward. A lower portion of the left side member 301 extends to a side portion of the oil reservoir 210 of the engine 200. Further, a lower portion of the left side member 301 extends forward of the lower portion of the body frame 100 and has a vertical width which reduces towards the front side, thus being designed to provide a desired appearance. As shown in Figs. 3 and 5, a rear side 301a of the lower portion of the left side member 301 extends between the side portion 200a of the engine 200 and the pedal portion 253 of the operation pedal 250. As shown in Fig. 5, the region 301a extending between the side portion 200a of the engine 200 and the pedal portion 253 is fixed to an attachment portion 133 provided on one footrest bracket 132 and is attached to the body frame 100 via the footrest bracket 132.

As shown in Fig. 4, the right side member 302 is formed to be substantially bilaterally symmetric with the left side member 301 and covers up at least a part of a right side of the engine 200. In this embodiment, although not shown, the right side member 302 partially covers up a right side of the cylinder 202 of the engine 200 and a front side of a right side of the crankcase 201. A lower portion of the right side member 302 faces a side portion of the oil reservoir 210 (see Fig. 2) of the engine 200. Further, a front side of the lower portion of the right side member 302 extends forward of the lower portion of the body frame 100. Although not shown, similarly to the above-stated left side member 301, a rear side of the lower portion of the right side member 302 is fixed to an attachment portion provided on the right footrest bracket and is attached to the body frame 100 via the footrest bracket. Rigidity of the under cowl 300 and attachment position accuracy are thereby ensured.

As shown in Figs. 4 and 5, the front side member 303 is attached to the body frame 100 and extends transversely on the front side of the body frame 100. The left side member 301 and the right side member 302 are connected together via the front side member 303. In this embodiment, as shown in Fig. 4, the front side member 303 includes a rib 331, first winged portions 332 and 333, and second winged portions 334 and 335. An attachment portion 341 attached to the body frame 100, via bracket 121, is provided on the rib 331. In this embodiment, the attachment portion 341 is fastened to the bracket 121 by means of a bolt. As shown in Fig. 4, the rib 331 extends forward and downward from a region attached to the body frame 100. Further, left and right side surfaces 351 and 352 of the rib 331 are inclined outwardly to the left and the right in a width direction as they get closer to a rear portion, respectively.

As shown in Fig. 4, the first winged portions 332 and 333 extend leftward and rightward from a tip or lower end of the rib 331 in the width direction, respectively. The second winged portions 334 and 335 extend leftward and rightward from a proximal or upper end of the rib 331, respectively above the first winged portions 332 and 333. The left first winged portion 332 and the left second winged portion 334 are connected to the left side member 301. The right first winged portion 333 is connected to the right side member 302. This front side member 303 is designed to introduce flowing air from the front side of the vehicle into appropriate regions of the engine. In other words, in this embodiment, the under cowl 300 is designed to introduce the flowing air into both right and left sides of the engine 200 through a space surrounded by the left and right side surfaces 351 and 352 of the rib 331, the left and right first winged portions 332 and 333, and the left and right second winged portions 334 and 335 as shown in Fig. 4. Furthermore, the under cowl 300 is designed so that the introduced flowing air is struck against a plurality of fins provided outward of the cylinder 202 of the engine 200 by upper surfaces of the left and right second winged portions 334 and 335.

As shown in Fig. 4, the stay 304 is attached to the body frame 100 above the front side member 303 and supports upper portions of the left side member 301 and the right side member 302. In this embodiment, the stay 304 is a rod-like member. A bracket 125 is provided for attaching the stay 304 to a position on the body frame 100 which is above the position at which the front side member 303 is attached to the body frame 100. Attachment pieces 372 are welded to a central portion 371 of the stay 304. As shown in Fig. 1, the stay 304 is provided in front of the body frame 100 and attached to the body frame 100. Left and right side portions 373 and 374 of the stay 304 extend obliquely rearward and are connected to upper portions of the left side member 301 and the right side member 302, respectively.

As shown in Fig. 5, the straddle-type vehicle 1000 includes the body frame 100, the engine 200 supported by the lower portion of the body frame 100, the operation pedal pivotally extending to the side portion of the engine 200, and the under cowl 300 covering up the side portion of the engine 200. The operation pedal 250 includes the pedal portion 253 provided at the tip end of the arm portion 252 extending from the swinging shaft 251 attached to the body frame 100 so as to face the side portion 200a of the engine 200. As shown in Fig. 3, the under cowl 300 extends between the side portion 200a of the engine 200 and the pedal portion 253. According to the straddle-type vehicle 1000, it is possible to prevent the foot from striking on the engine 200 during manipulation of the operation pedal 250 since the under cowl 300 extends between the side portion 200a of the engine 200 and the pedal portion 253. In this case, a rider's foot can be prevented from striking or contacting the engine 200 by changing a shape of the under cowl 300, thereby making it possible to suppress costs, assembly complexity and the like.

Moreover, in this embodiment, as shown in Fig. 5, the region 301a extending between the side portion 200a of the engine 200 and the pedal portion 253 is fixed to the attachment portion 133 provided on the footrest bracket 132 attached to the body frame 100. In this way, since the region 301a is fixed to the body frame 100, attachment rigidity of the region 301a extending between the side portion 200a of the engine 200 and the pedal portion 253 is improved. It is thereby possible to prevent the region 301a from flapping in the flowing air.

Moreover, in this embodiment, the body frame 100 includes the footrest brackets 132 to which the footrests 131 are attached, respectively. Further, the region 301a of the under cowl 300 extending between the side portion 200a of the engine 200 and the pedal portion 253 is fixed to the footrest brackets 132. In this case, each footrest bracket 132 functions as a bracket that fixes the region 301a extending between the side portion 200a of the engine 200 and the pedal portion 253, thereby making it unnecessary to provide a bracket for attaching the region 301a to the body frame 100 and making it possible to prevent an increase in the number of components.

Furthermore, in this embodiment, the region 301a of the under cowl 300 extending between the side portion 200a of the engine 200 and the pedal portion 253 faces the side portion of the oil reservoir 210 of the engine 200 as shown in Fig. 5. This enables the under cowl 300 to introduce the flowing air into the side portion of the oil reservoir 210 in which oil circulating in the engine 200 is accumulated, facilitates cooling of the oil, and improves cooling performance of the engine 200.

The straddle-type vehicle according to one embodiment of the present invention has been described so far based on the drawings. However, the present invention is not limited to the above-stated embodiment.

For example, the respective shapes of the left side member, the right side member, the front side member, and the stay, the attachment structure of the under cowl to the body frame, and a structure of the under cowl are not limited to the above-stated embodiment but can variously be changed. Further, the pedal performing the transmission operation on the transmission has been described as the operation pedal by way of example. However, the operation pedal is not necessarily the pedal that exhibits such a function. Besides, the present invention is not limited to the above-stated embodiment but can be applied to various types of straddle-type vehicles.

### Description of Reference Numerals

100 Body frame
101 Head pipe
121 to 123 Bracket
125 Bracket
131 Footrest
132 Footrest bracket
133 Attachment portion
200 Engine
200a Side portion of engine
201 Crankcase
202 Cylinder
210 Oil reservoir
220 Transmission
250 Operation pedal
251 Swinging shaft
252 Arm portion
253 Pedal portion
300 Under cowl
301 Left side member
301a Rear side of lower portion of left side member (region extending between the side portion of engine and pedal portion)
302 Right side member
303 Front side member
304 Stay
331 Rib
332, 333 First winged portion
334, 335 Second winged portion
341 Attachment portion
351, 352 Left and right side surfaces of rib
510 Handle
520 Headlamp
530 Cowl
540 Fuel tank
550 Side cowl
601 Front wheel
602 Rear wheel
1000 Straddle-type vehicle

## Claims

1. A straddle-type vehicle (1000) comprising:
a body frame (100);
an engine (200);
an operation pedal (250) pivotally extending to a side portion of the engine (200) and comprising a pedal portion (253); and
an under cowl (300) covering the side portion of the engine (200), wherein the under cowl (300) extends between the side portion of the engine and the pedal portion (253); and wherein a region of the under cowl (300) extending between the side portion of the engine (200) and the pedal portion (253) faces a side portion of an oil reservoir (210) of the engine (200); wherein the body frame (100) includes a footrest bracket (132) to which a footrest (131) is attached and a region of the under cowl (300) extending between the side portion of the engine (200) and the pedal portion (253) is fixed to the footrest bracket (132).

2. The straddle-type vehicle (1000) according to any preceding claim, further comprising a transmission (220), wherein the operation pedal (250) is configured to perform a transmission operation on the transmission (220).

## Patentansprüche

1. Im Grätschsitz zu benutzendes Fahrzeug (1000), umfassend:
einen Karosserierahmen (100);
einen Motor (200);
ein Betätigungspedal (250), welches sich schwenkbar zu einem Seitenabschnitt des Motors (200) erstreckt und einen Pedalabschnitt (253) umfasst; und
eine untere Abdeckhaube (300), welche den Seitenabschnitt des Motors (200) abdeckt, wobei die untere Abdeckhaube (300) sich zwischen dem Seitenabschnitt des Motors und dem Pedalabschnitt (253) erstreckt; und wobei ein Bereich der unteren Abdeckhaube (300) welcher sich zwischen dem Seitenabschnitt des Motors (200) und dem Pedalabschnitt (253) erstreckt, einem Seitenabschnitt eines Öltanks (210) des Motors (200) gegenübersteht; wobei der Karosserierahmen (100) einen Fußstützenhalter (132) umfasst, an welchem eine Fußstütze (131) befestigt ist und ein Bereich der unteren Abdeckhaube (300), der sich zwischen dem Seitenabschnitt des Motors (200) und dem Pedalabschnitt (253) erstreckt, an dem Fußstützenhalter (132) befestigt ist.

2. Im Grätschsitz zu benutzendes Fahrzeug (1000) nach dem vorhergehenden Anspruch, ferner umfassend ein Getriebe (220), wobei das Betätigungspedal (250) konfiguriert ist um eine Getriebeoperation auf dem Getriebe (220) durchzuführen.

## Revendications

1. Véhicule du type à enfourcher (1000), comprenant :
un cadre de châssis (100);
un moteur (200) ;
une pédale opérationnelle (250) s'étendant de manière pivotante vers une partie latérale du moteur (200) et comprenant une partie de pédale (253) ; et
un capot inférieur (300) recouvrant la partie latérale du moteur (200), dans lequel le capot inférieur (300) s'étend entre la partie latérale du moteur et la partie de pédale (253) ; et dans lequel une région du capot inférieur (300) s'étendant entre la partie latérale du moteur (200) et la partie de pédale (253) fait face à une partie latérale d'un réservoir d'huile (210) du moteur (200) ; dans lequel le cadre de châssis (100) inclut un support de repose-pieds (132) sur lequel est fixé un repose-pieds (131), et une région du capot inférieur (300) s'étendant entre la partie latérale du moteur (200) et la partie de pédale (253) étant fixée sur le support du repose-pieds (132).

2. Véhicule du type à enfourcher (1000) selon la revendication précédente, comprenant en outre une transmission (220), dans lequel la pédale opérationnelle (250) est configurée pour exécuter une opération de transmission sur la transmission (220).
